# EUROPEAN PATENT APPLICATION

(11) **EP 2 272 664 A1**
(43) Date of publication of application: **12.01.2011**
(21) Application number: 09401013.9
(22) Date of filing: 08.07.2009
(51) Int. Cl.: B32B 15/01

(54) **Process for manufacturing foils, sheets and shaped parts from an alloy with titanium and aluminium as its main elements.**

(71) Applicant: Brandenburgische Technische Universität, 03044 Cottbus (DE)
(72) Inventor: Christoph, Leyens, 53639 Königswinter (DE); Zhang, Jiulai, 03046 Cottbus (DE)
(74) Representative: Hatscher, Sabine Astrid

(57) **Abstract**

The invention relates to a process for manufacturing foils, sheets and shaped parts from an alloy with titanium and aluminium as its main elements.

The aim of the invention is to suggest a process for manufacturing foils, sheets and shaped parts from an alloy with aluminium and titanium as its main elements, by means of which these products can be produced cost-efficiently.

In this process parts are produced from an alloy with foils or sheets of titanium and aluminium by forming a sandwich of several layers of foils or sheets in a first phase. The individual foils are stacked so that aluminium and titanium alternate.

Especially for producing thin foils or sheets, these can be joined throughout by diffusion bonding. For the production of thicker plates and shaped bodies, the two outer titanium foils are welded only in the border area. The composite formed in this manner is still relatively ductile and can be given a shape resembling that of the final product.

In a second phase, this composite is annealed until the aluminium is diffused completely into the titanium layers and a homogenous titanium alloy or titanium aluminide alloy has formed.

## Description

The invention relates to a process for manufacturing foils, sheets and shaped parts from an alloy with titanium and aluminium as its main elements. Gamma Titanium aluminides are high-temperature intermetallic materials whose weight is only half of that of steel or nickel based alloys. They can be applied at much higher temperatures than those of conventional titanium alloys. Technically relevant gamma titanium aluminide alloys consist of γ-phase (TiAl) and small amount of a₂ phase (Ti₃Al). Sheets or foils made of titanium aluminides can be potentially applied in aero-engines and space shuttles. It is difficult to deform intermetallic materials because of their particular, ordered crystal structure. This makes the manufacture of sheets and thin foils particularly difficult. However, their availability is a precondition for the use of titanium aluminides in thin-walled sheet metal structures. Foils and thin sheets of conventional titanium alloys are also of interest as far as the application concerned. For this reason the invention is aimed at providing a cost-efficient method for manufacturing sheets, foils and components from gamma titanium aluminide alloys and conventional titanium alloys.

Alternative methods for manufacturing foils and sheets such as powder compaction, hot rolling and melt spinning under vacuum, electron-beam evaporation and plasma spraying have not become accepted until now. The main reasons are, on the one hand, the high cost and insufficient material quality, on the other. DE 43 04 481 A1 starts out from the assumption that such an alloy can be produced very cost-efficiently by casting but also by hot isostatic pressing of atomized powder.

According to the process described in JP 50649/89, thin sheets are manufactured from the intermetallic titanium - aluminium compound by performing the following steps:
- Heating the mixture, which consists of 35 to 44 per cent by weight of Al and the remainder of titanium under an inert-gas atmosphere to produce a melt,
- Continuous feeding of this melt to an open mould, which is defined by a pair of cooling rolls and a pair of lateral stops, the rolls rotating at a circumferential speed of 0.1 to 10 m/s, and
- Cooling the melt by means of the cooling rolls inside the roll gap, with a constant force being applied to these rolls in order to form a reinforced sheet whose thickness corresponds to the clearance between the rolls.

JP 122885-78 suggests another method for producing an alloy of titanium and aluminium. Titanium powder and aluminium powder are mixed; the mixture is then pressed and the compact heated, under vacuum or under an inert-gas atmosphere, to a temperature that is lower than the melting temperature of aluminium but not lower than 500° C. Heating of the resulting body is continued at a temperature that is equal or higher than the melting temperature of aluminium. This method is not suitable for production of large sheets and foils. Another disadvantageous effect is that due to the relatively large surface of aluminium powder, which is known to consist always of aluminium oxide, a large quantity of oxygen is introduced into the alloy, which may give rise to quality problems.

In many cases attempts were made to produce foils and sheets by reaction annealing of titanium and aluminium foils.

A method described in the literature is, for instance, vacuum hot pressing of titanium and aluminium foils arranged in alternate layers [Fukutomi, H., et al, Production of TiAl sheet with oriented lamellar microstructure by diffusional reaction of aluminium and textured titanium foils; Materials Transactions, JIM, 1999. 40(7): p. 654-658 and Su., V., Zhang, G., Guo, J., Jia, J., Fu, H., Investigation on a fabrication technique of TiAl sheet, Materials Science Forum, 2005. 475-479: p. 805-808]. They were annealed initially at 550°C and then at 630°C (below the melting point of aluminium) until the aluminium portion was used up completely. The final heat treatment at 1350°C, below the melting temperature of the intermetallic phase TiAl3 (Tₘ[TiAl₃]= 1395°C), resulted in a sheet consisting of the two phases Y TiAl and a₂-TiAl₃. However, this process has the following major disadvantages:

The different diffusion rates of aluminium and titanium during the formation of the titanium aluminide alloy result in the formation of porosity (Kirkendall pores). To prevent them the vacuum hot pressing process must be carried out at a pressure of 20 MPa and a temperature of 1350°C. This increases considerably the production cost; furthermore the production of foils becomes more difficult. Thicker sheets have to be made of a multitude of titanium and aluminium foils, which reduces the economic efficiency of the production process.

DE 10 2006 031 469 B4, too, describes a process for manufacturing a component from a titanium flat product for high-temperature applications, which includes the following steps:
a) applying an Al layer at least to one side of the titanium flat product by roll cladding the titanium flat product with an aluminium alloy foil
b) cold rolling the titanium flat product with the aluminium layer at a reduction ratio of 30-90%,)
c) soft annealing the titanium flat product covered with the aluminium layer in a continuous furnace or hood-type furnace ,
d) forming the component from the soft-annealed titanium flat product covered with aluminium layer,
e) heat-treating the component formed of the titanium flat product covered with the aluminium layer to induce the formation of a coating comprising an intermetallic phase.

Since the thickness of the Al layer on the titanium flat product does not exceed 90 µm, particularly 70 µm, after roll cladding and cold rolling, only a layer close to the surface has transformed into titanium aluminide. Although components made from it have the abrasion resistance of the alloy, their mechanical strength, however, largely corresponds to that of the titanium body.

Consequently, the aim of the invention is to suggest a process for manufacturing foils, sheets and shaped parts from an alloy with titanium and aluminium as its main elements, especially titanium alloy and gamma titanium aluminide alloy, by means of which these products can be produced cost-efficiently without defects related to conventional sintering processes occurring.

According to the invention, a process comprising the steps outlined in the main claim achieves this task.

The sub claims detail different solutions to this purpose.

In this process, foils, sheets and shaped parts are produced from an alloy with titanium and aluminium as its main elements, particularly titanium alloy or titanium aluminide alloy by bonding several layers of foils or sheets in a first phase. As the sheets should be relatively thin, we will only refer to foils for the sake of simplicity in the following, even if both foils and sheets may be applied. These foils consist of aluminium and/or aluminium alloys - in the following summed up under the term aluminium - on the one hand and titanium and/or titanium alloys - in the following summed up under the term titanium, on the other hand.

The individual foils are stacked so that aluminium and titanium alternate.

Niobium-containing titanium aluminide alloys can be made by using niobium-containing Ti-foil or by using additional niobium foils.

Especially for producing thin foils or sheets, these can be joined throughout by diffusion bonding. For the production of thicker plates and shaped bodies, the two outer foils - in this case titanium foils - are welded only in the border area by a known welding technique. To prevent the formation of air or gas blisters, a vacuum has to be created during the welding process inside the packing. That can be achieved by sealing the packing under vacuum but evacuation of the sealed packing via a connecting sleeve or a valve is also in accordance with the invention. The composite formed in this manner is still relatively ductile and can be given a shape resembling that of the final product.

In a second phase, this composite is annealed until the aluminium is diffused completely into the titanium layers and a homogenous titanium alloy and /or titanium aluminide alloy has formed.

To produce thin foils or sheets of titanium alloy or titanium aluminide alloy, a titanium foil or titanium sheet is welded on one side or both sides with an aluminium layer. The method of choice is vacuum diffusion welding. According to this method the layers are joined, while applying pressure to the outer layers, by increasing the temperature to a level where aluminium starts to diffuse into the titanium layer, thus joining the adjacent layers by diffusion.

In a second phase, this composite layer is annealed below the melting temperature of the Al-foil, either immediately after vacuum diffusion welding or following an intermediate forming step, until the aluminium has diffused completely into the titanium layers. Mainly TiAl₃ and remaining titanium are formed. Afterwards annealing of the foil is continued at temperatures above the melting temperature of the aluminium foil used but below the melting point of TiAl₃, until a homogenous titanium alloy or titanium aluminide alloy has formed. In case of titanium alloy, TiAl₃ is dissolved in the second annealing stage by diffusion of Al into Ti. In case of Y-titanium aluminide alloy, TiAl₃ will react with titanium in the second annealing stage and mainly Y-TiAl and a₂-Ti₃Al are formed.

So as to generate the pressure necessary for vacuum diffusion welding, we propose fixing the foils in a device comprising a tension member made of a material with a lower thermal expansion coefficient and a pressure member made of a material with a higher thermal expansion coefficient. The entire assembly is exposed to a temperature required for diffusion welding, ranging from 500°C to 660°C, preferably 600°C. Pressure is built up due to the stress occurring as a consequence of different expansion behaviour during heating. This can be achieved specifically by winding the foils or sheets on a mandrel of austenitic high-grade steel and fixing them from outside with a ring of high-temperature ferritic or martensitic steel.

If several layers of foil are wound on the mandrel, individual layers should be separated by an antitack agent such as boron nitride. When the entire assembly is heated to the temperature required for diffusion welding, the mandrel expands more than the ring surrounding it. The layers of foil are pressed together, resulting in welding.

To produce thicker plates or shaped bodies according to the invention, capsules consisting of titanium foil are filled completely either with only one aluminium foil or with alternate layers of aluminium and titanium foil. The border area of these capsules must be sealed by known welding methods. By creating a vacuum inside the capsules during welding, the formation of cavities in the final product can be prevented.

These capsules consist preferably of two titanium foils between which only one aluminium foil or alternative aluminium and titanium foils are placed until the desired material thickness is attained. These outer titanium sheets are joined by a circumferential ring made of the same titanium and welded with each other under vacuum or by means of a process creating a vacuum inside the packing.

The capsules made in this way can now be subjected to a first forming step.

The capsule is then heated to a temperature, where TiAl₃ is already soft or liquid but still below the melting point of the final product, , and kept at this temperature until TiAl₃ has disappeared due to diffusion of aluminium into the titanium portion.

To achieve a homogenous distribution of Al, it is advantageous to deform the capsule after a pre-annealing at a low temperature (660°C - 1000°C), so that Al is completely converted to porous TiAl₃. The deformation of the capsule takes place at room or a higher temperature. Now the final reaction annealing can be done. Therefore, in case of a not well horizontally positioned sheet during annealing at temperatures ranging from 660°C to 1000°C, the hydrostatic pressure of the aluminium melt is so low that a local swelling of the capsule, which causes a heterogeneous Al distribution, does not occur.

During annealing a pressure applied on the capsule is needed. This can be achieved by heating the capsule under an inert-gas atmosphere at approx. 1 bar or by hot isostatic pressing (HIP).

As the capsules are already shaped like the shaped bodies to be produced and the shrinkage occurring during reaction annealing is taken into account, the necessary finishing operations can be minimized.

Especially when making shaped bodies, it is in accordance with the invention to embed, during this process, reinforcements in the form of fibres, wires or particles of high-strength materials, in particular niobium alloys and/or silicon carbide, between the individual layers so that they are firmly enclosed by the final product.

The invention will now be described in greater detail by means of two embodiments:
1.TiAl foil: A specimen (Ti/Al) consists of one titanium foil (diameter 26 x 0.025 mm²) and one aluminium foil (diameter 26 x 0.020 mm²), a second specimen (Al/Ti/Ti/Al) consists of two titanium foils and an aluminium foil each as the covering layer of the same dimension. The two specimens are placed one above the other with boron nitride as antitack agent and fixed between two thick disks made of austenitic high-grade steel NiCr 18 10 with screws made of high-temperature martensitic steel X20CrMoV 121. The fixed specimens are annealed at 600°C for 30 hours. The specimens are then removed from the fixing device, placed between two molybdenum foils and annealed in argon (approx. 1.2 bar) at 1300°C for five hours and at 1400°C for one hour. The resulting specimen is dense and shows a coarse lamellar microstructure; there are only a few isolated pores on the surface that can be easily removed by machining. A duplex structure (1300°C / 5 h) or a globular structure (1200°C / 5 h) is formed at the lower temperatures of the second annealing stage. EDS analysis on the specimen with a globular microstructure shows that the specimen consists of Y-TiAl and a₂-Ti₃Al. A corrugated foil was produced. For that purpose two Ti foils (0.025 mm) and two Al foils (0.020 mm) measuring 30x25 mm and arranged in the sequence Al/Ti/Ti/Al were annealed in the same tool under vacuum at 600°C / 5 h, then folded to produce the shape at room temperature and finally annealed in a graphite tool under a weight at 600°C / 25 h + 1200°C / 5 h in Ar (approx. 1.2 bar).
2.TiAl sheet: Two titanium sheets (diameter 26 x 0.5mm), two titanium rings (outside diameter 26mm, inside diameter 24mm, thickness 0.5mm) and one aluminium sheet (diameter 24 x 0.8mm) were fixed in the above-described foil-making tool. Aluminium sheet and titanium rings were placed in the middle. This specimen was annealed under vacuum at 600°C for 30 hours in order to weld the specimen at the border area. The specimen was then removed from the fixing device and heat-treated at 1400°C (above the melting point of the TiAl₃ phase) for two hours., aluminium and titanium have reacted completely to yield Y-TiAl+ Ti₃Al; however, the chemical composition across the sheet width is inhomogeneous. In a second trial, the specimen was annealed in the second annealing stage at 1370°C, which is below the melting temperature of TiAl₃, for 10 hours, resulting in homogenous sheet thickness and chemical homogeneity.

## Claims

1. Process for manufacturing foils, sheets and shaped parts from an alloy with titanium and aluminium as its main elements, **characterized in that** in a first phase a sandwich structure is made from several layers of foils and/or sheets of titanium and/or titanium alloys and aluminium and/or aluminium alloys , which are either throughout joined or welded with each other only in the border area by a known welding process, with a vacuum being created within the packing; that in a second phase the sandwich thus formed is annealed until the aluminium is diffused completely into the titanium layers and a homogenous titanium alloy or titanium aluminide alloy has formed.

2. Process according to Claim 1, **characterized in that** additional niobium foils are inserted in the sandwich.

3. Process according to Claim 1 or 2, **characterized in that** a foil, a sheet or a shaped part from a titanium alloy or a titanium aluminide alloy is made by bonding one or more foils or sheets of titanium or titanium alloy on one side or both sides of the sandwich with an aluminium layer in the first phase; and that in a second phase, the sandwich, either immediately or after an intermediary forming step, is firstly annealed below the melting temperature of the applied aluminium foil until the aluminium has completely diffused into the titanium layers and finally heat treated above the melting temperature of the applied aluminium foil but below the melting point of TiAl₃ until a homogenous titanium alloy or titanium aluminide alloy has formed.

4. Process according to Claim 3, **characterized in that** welding is achieved by means of diffusion welding in which the sandwich is annealed under a pressure at a temperature at which aluminium starts diffusing into the titanium layer and the adjacent layers are joined by that diffusion.

5. Process according to Claim 4, **characterized in that** the pressure is produced by fixing the foils or sheets in a device comprising a tension member made of a material with a lower thermal expansion coefficient and a compression member made of a material with a higher thermal expansion coefficient and exposing the entire assembly to a temperature necessary for diffusion welding, ranging from 500°C to 660°C, preferably 600°C.

6. Process according to Claim 5, **characterized in that** for the purpose of diffusion welding foils or sheets are wound on a mandrel consisting of a material with a higher thermal expansion coefficient and are fixed from outside by a ring consisting of a material with a lower thermal expansion coefficient, that individual windings are separated by an antitack agent such as boron nitride and that the entire assembly is subjected to heating as required for diffusion welding.

7. Process according to Claims 5 or 6, **characterized in that** austenitic steel is used as the material with the higher thermal expansion coefficient and ferritic or martensitic steel is used as the material with the lower thermal expansion coefficient.

8. Process according to Claim 1 or 2, **characterized in that** capsules of titanium and/or titanium alloy are filled completely either with one layer of foil or sheet of aluminium and/or aluminium alloy or with alternating layers of foil or sheet of aluminium and/or aluminium alloy and titanium and/or titanium alloy, that the border areas of these capsules are sealed by means of known welding techniques with a vacuum created inside the capsules, and that the capsules are annealed under a pressure at a temperature where TiAl₃ is already soft or liquid but still below the melting point of the final product until TiAl₃ has disappeared due to the diffusion of aluminium into the titanium portion.

9. Process according to Claim 8, **characterized in that** the capsules are heated under a protective atmosphere at approx. 1 bar or by hot isostatic pressing (HIP).

10. Process according to Claims 8 or 9, **characterized in that** the capsules consist of two foils or sheets of titanium or titanium alloys, which are joined by a circumferential ring of the same material and are welded with each other under vacuum or by means of a process creating a vacuum inside the packing.

11. Process according to one of the preceding Claims, **characterized in that** the capsules have the shape of the shaped bodies to be produced and that the shrinkage occurring during reaction annealing is taken into account.

12. Process according to one of the preceding Claims, **characterized in that**, during the process, reinforcements in the form of fibres, wires or particles of high-strength materials are embedded between the individual layers in such a way that these reinforcements are firmly enclosed by the final product.

13. Process according to Claims 12, **characterized in that** the reinforcements are niobium alloys and/or silicon carbide.
